# FASCICULE DE BREVET EUROPEEN

(11) **EP 0 720 815 B1**
(45) Date de publication et mention de la délivrance du brevet: **31.05.2000**
(21) Numéro de dépôt: 96420005.9
(22) Date de dépôt: 08.01.1996
(51) Int. Cl.: A01N 43/54

(54) **Nouvelle composition fongicide à base d'un composé dicarboximide**
Neue fungizide Zusammensetzung auf Basis einer Dicarboximidverbindung
New fungicidal composition based on a dicarboximide compound

(30) Priorité: 09.01.1995 FR 9500331
(43) Date de publication de la demande: 10.07.1996
(73) Titulaire: AVENTIS CROPSCIENCE S.A., 69009 Lyon (FR)
(72) Inventeur: Duvert, Patrice, F-69004 Lyon (FR)

(56) Documents cités:
- EP-A- 0 310 550
- DD-A- 151 404
- FR-A- 2 516 350
- GB-A- 2 267 644
- CHEMICAL ABSTRACTS, vol. 119, no. 11, 13 Septembre 1993 Columbus, Ohio, US; abstract no. 111281, XP002001400 & JP-A-05 112 408 (KUMIAI CHEMICAL INDUSTRY) 7 Mai 1993
- CHEMICAL ABSTRACTS, vol. 119, no. 5, 2 Août 1993 Columbus, Ohio, US; abstract no. 43336, XP002001401 & JP-A-05 065 205 (KUMIAI CHENICAL INDUSTRY) 19 Mars 1993

## Description

La présente invention a pour objet une composition fongicide, utile notamment en horticulture et en viticulture, à base d'un composé dicarboximide. Elle concerne également un procédé de traitement fongicide ayant le même but.

On connaît des dérivés dicarboximides, comme l'iprodione, utiles dans le traitement des attaques fongiques dues à la pourriture grise des cultures, causée par le champignon phytopathogène *Botrytis cinerea.*

Cependant l'efficacité de ces composés n'est plus tout à fait satisfaisante, notamment en raison de l'apparition de souches de champignons résistant à ces composés.

Il est, par ailleurs, toujours souhaitable de réduire les doses de produits chimiques épandus dans l'environnement pour lutter contre les attaques fongiques des cultures, notamment en réduisant les doses d'application des produits, et d'élargir les possibilités de choix offertes au cultivateur, afin que celui-ci trouve la solution la mieux adaptée à son problème particulier.

Un but de l'invention est donc de fournir une nouvelle composition fongicide, utile pour les problèmes exposés ci-dessus.

Un autre but de l'invention est de proposer une nouvelle composition fongicide utile dans le traitement préventif de la pourriture grise des cultures.

Il a maintenant été trouvé que ces buts pouvaient être atteints en totalité ou en partie grâce à la composition fongicide selon la présente invention, qui permet d'observer des effets synergiques remarquables.

On connaît par les documents JP 5112408, JP 5065205 et GB 2267644 des associations à base de pyrimethanil et de dérivés dicarboximides. Un but de la présente invention est de proposer des associations synergiques de cyprodinil (autre anilinopyrimidine) et de dérivés dicarboxyliques.

La composition fongicide selon l'invention est caractérisée en ce qu'elle comprend un composé A choisi parmi l'iprodione, la vinclozoline, ou la procymidone, et un composé B qui est le cyprodinil, encore appelé 2-phenylamino-4-cyclopropyl-6-methyl-pyrimidine.

L'iprodione, la vinclozoline, et la procymidone sont décrites dans l'ouvrage : "The Pesticide Manual" 9ème édition, de Charles R. Worthing et Raymond J. Hance publié par le British Crop Protection Council.

Le cyprodinil est décrit dans la demande de brevet européen EP 310550.

Cette composition est efficace notamment pour le traitement de la pourriture grise *(Botrytis cinerea)* de la vigne, des cultures maraîchères telles que les cultures légumières (notamment laitue, tomate, cucurbitacées), les fraisiers, les pois, et les cultures florales .

Le rapport pondéral composé A/composé B , dans la composition selon l'invention, est généralement compris entre 0,5 et 5, de préférence entre 1 et 3.

Selon une variante préférée de l'invention, le composé A est la 3-(3,5-dichlorophenyl)-N-isopropyl-2,4-dioxoimidazolidine-1-carboxamide, encore appelée iprodione.

Les compositions selon l'invention sont avantageuses encore par le spectre d'activité et les basses doses utilisables pour les matières actives, cette dernière qualité étant particulièrement importante pour des raisons écologiques aisément compréhensibles.

La composition fongicide selon l'invention contient habituellement 0,5 à 95 % de mélange du composé A et du composé B.

Il peut s'agir de la composition concentrée c'est-à-dire du produit commercial associant les deux matières actives. Il peut s'agir également de la composition diluée prête à être pulvérisée sur la culture à traiter. Dans ce dernier cas la dilution à l'eau peut être effectuée soit à partir d'une composition concentrée commerciale renfermant les deux matières actives (ce mélange est appelé " prêt à l'emploi " ou encore " ready mix ", en langue anglaise) , soit au moyen du mélange extemporané (appelé en anglais " tank mix ") de deux compositions concentrées commerciales renfermant chacune une matière active.

La composition selon l'invention peut comprendre en outre tous les additifs ou adjuvants habituels des compositions phytosanitaires, notamment des supports, des tensioactifs, des agents d'adhérence et des agents de fluence.

Par le terme "support", dans le présent exposé, on désigne une matière organique ou minérale, naturelle ou synthétique, avec laquelle les matières actives sont associées pour faciliter leur application sur la plante. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsifiant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est désirable pour favoriser la dispersion des matières actives dans l'eau et leur bonne application sur les végétaux.

Cette composition peut contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, la composition selon l'invention peut inclure tous les additifs solides ou liquides correspondant aux techniques habituelles de la formulation des produits phytosanitaires.

La composition selon l'invention peut être sous forme solide, gélifiée, ou liquide, et dans ce dernier cas sous forme de solutions ou de suspensions ou d'émulsions ou de concentrés émulsionnables. Les compositions liquides sont préférées, tant en raison de leur commodité de mise en oeuvre qu'en raison de leur simplicité de fabrication.

Comme formes de compositions solides, on peut citer les poudres pour poudrage ou dispersion (à teneur en composés actifs pouvant aller jusqu'à 100 %), les poudres mouillables et les granulés pour épandage à sec ainsi que les granulés dispersables ou solubles.

Les poudres mouillables (ou poudres à pulvériser) de même que les granulés dispersables contiennent habituellement 20 à 95 % de matières actives, et en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc... Il est bien entendu que certaines de ces compositions, telles les poudres mouillables ou les granulés dispersables, sont destinées à constituer des compositions liquides lors de l'application.

Comme formes de compositions liquides, on peut citer les solutions, en particulier les concentrés solubles dans l'eau, les concentrés émulsionnables, les émulsions, les suspensions concentrées, les aérosols, les pâtes.

Les concentrés émulsionnables ou solubles comprennent le plus souvent 10 à 80 % de matières actives, les émulsions ou solutions prêtes à l'application contenant, quant à elles, 0,01 à 20 % de matières actives. En plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précédemment cités. A partir de ces concentrés, on peut obtenir par dilution avec de l'eau des émulsions de toute concentration désirée, qui conviennent particulièrement à l'application sur les parties aériennes de la plante à traiter. Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les suspensions concentrées, également applicables en pulvérisation, sont un produit fluide stable, ne donnant pas lieu à un épaississement ou à la formation d'un sédiment après stockage, et elles contiennent habituellement de 10 à 75 % de matières actives, de 0,5 à 15 % d'agents tensioactifs, de 0,1 à 10 % d'agents thixotropes, de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel les matières actives sont peu ou pas solubles : certaines matières solides organiques ou des sels minéraux peuvent être dissous dans le support pour aider à empêcher la sédimentation ou comme antigels pour l'eau.

La composition selon l'invention est préparée selon des procédés connus en soi.

Ainsi, pour obtenir les poudres à pulvériser ou poudres mouillables, on mélange intimement les matières actives dans des mélangeurs appropriés avec les substances additionnelles et on broie avec des moulins ou autres broyeurs. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les parties aériennes des végétaux.

A la place des poudres mouillables, on peut réaliser des pâtes ou suspensions concentrées. Les conditions et modalités de réalisation et d'utilisation de ces pâtes sont semblables à celles des poudres mouillables ou poudres à pulvériser, une partie de l'opération de broyage nécessaire étant simplement réalisée en milieu liquide.

Les granulés dispersables sont habituellement préparés par agglomération ou extrusion ou compactage, dans des systèmes de granulation appropriés, de compositions de type poudre mouillable. Les granulés pour épandage à sec sont habituellement obtenus par imprégnation d'un support granulé avec une solution ou une émulsion des matières actives.

L'invention concerne enfin un procédé de traitement destiné à prévenir les attaques fongiques des cultures, caractérisé en ce que l'on applique sur les parties aériennes des végétaux une dose efficace et non phytotoxique :
- d'un composé A choisi parmi l'iprodione, la vinclozoline, ou la procymidone, et d' un composé B qui est le cyprodinil, encore appelé 2-phenylamino-4-cyclopropyl-6-methyl-pyrimidine ; ou
- d'une composition selon l'invention.

Parmi les attaques fongiques, susceptibles d'être prévenues par le procédé selon l'invention, on peut citer :
- *Botrytis cinerea* (responsable de la pourriture grise) pour la vigne, les cultures maraîchères, le pois,
- *Venturia inaequalis* (responsable de la tavelure) pour les cultures d'arbres fruitiers produisant des fruits à pépins,
- *Monilia fructigena* (responsable de la moniliose) pour les cultures d'arbres fruitiers produisant des fruis à noyaux,
- les champignons phytopathogènes du genre *Alternaria sp.* (responsables des alternarioses) pour les cultures maraîchères, le colza, les agrumes et les solanées,
- les champignons phytopathogènes du genre *Ascochyta sp.* (responsables de l'anthracnose) pour le pois,
- les champignons phytopathogènes du genre *Penicillium sp.* (responsables de moisissures) pour la conservation des fruits,
- *Rhizoctonia solani* (responsable des fontes de semis et de nécroses) pour les cultures maraîchères et les solanées.

La composition est utilisée avantageusement de manière à ce que la dose appliquée est telle que la dose du composé A est comprise entre 200 et 1000 g/ha, de préférence entre 300 et 600 g/ha, et que la dose du composé B est comprise entre 100 et 500 g/ha, de préférence entre 150 et 400 g/ha.

L'exemple suivant est donné à titre non limitatif des propriétés avantageuses des compositions selon l'invention.

### Exemple : Test in vivo d'une composition comprenant un mélange de d'iprodione et de cyprodinil sur Botrytis cinerea responsable de la pourriture grise du concombre.

On utilise une formulation commerciale d'iprodione, qui est une suspension concentrée acqueuse, et une formulation également commerciale de cyprodinil, qui est un granulé dispersable.

Des plants de concombre (variété Marketer) sont cultivés dans des pots remplis de tourbe/pouzzolane. Lorsque ces plants sont âgés de 10 jours (stade cotylédonnaire), ils sont traités par pulvérisation d'une suspension aqueuse contenant un mélange des 2 matières actives aux doses indiquées dans le tableau ci-dessous.

Au bout de 24 heures, on contamine, au moyen d'une suspension aqueuse de spores (150000 sp/cm³) de *Botrytis cinerea,* chaque plant par dépôt de 5 gouttes sur la face supérieure des 2 cotylédons .

Après cette contamination, les plants de concombre sont placés pendant 7 jours à 15°C en atmosphère saturée d'humidité.

On procède alors à la lecture des résultats, par comparaison avec des plants témoins de concombre contaminés n'ayant pas reçu de traitement fongicide. Pour la lecture des résultats, on détermine le nombre de gouttes de la suspension contaminante qui ont donné lieu sur la face inférieure des cotylédons à une zone dite sporulante, c'est-à-dire à une tache à l'aspect grisâtre et duveteux.

On détermine ainsi pour chaque matière active ou mélange de matières actives, à la dose indiquée, l'efficacité fongicide exprimée en pourcentage, qui est indiquée dans le tableau ci-dessous.

| iprodione (doses en mg/l) cyprodinil | 0 | 3 | 6 | 12 | 25 | 50 |
|---|---|---|---|---|---|---|
| 0 | 0 | 5,1 | 7,1 | 12,2 | 15,2 | 30,5 |
| 3 | 8,6 | | 22,3 | | | |
| 6 | 15,2 | 7,1 | 15,2 | 37,6 | | |
| 12 | 20,3 | | 30,5 | 28,9 | 46,2 | |
| 25 | 32,5 | | | 37,6 | 42,6 | 76,6 |

## Revendications

1. Composition fongicide synergique caractérisée en ce qu'elle comprend un composé A choisi parmi l'iprodione, la vinclozoline, ou la procymidone, et un composé B qui est le cyprodinil, encore appelé 2-phenylamino-4-cyclopropyl-6-methyl-pyrimidine, et en ce que le rapport pondéral composé A/composé B est compris entre 0,5 et 5.

2. Composition fongicide selon la revendication 1, caractérisée en ce que le rapport pondéral composé A/composé B est compris entre 1 et 3.

3. Composition fongicide selon l'une des revendications 1 ou 2, caractérisée en ce que le composé A est la 3-(3,5-dichlorophenyl)-N-isopropyl-2,4-dioxoimidazolidine-1-carboxamide, encore appelée iprodione.

4. Composition fongicide selon l'une des revendications 1 à 3, caractérisée en ce qu'elle contient 0,5 à 95 % de mélange du composé A et du composé B.

5. Procédé de traitement destiné à prévenir les attaques fongiques des cultures, caractérisé en ce que l'on applique sur les parties aériennes des végétaux une dose efficace et non phytotoxique :
- d'un composé A choisi parmi l'iprodione, la vinclozoline, ou la procymidone, et d' un composé B qui est le cyprodinil, encore appelé 2-phenylamino-4-cyclopropyl-6-methyl-pyrimidine ; ou
- d'une composition selon l'une des revendications 1 à 4.

6. Procédé de traitement selon la revendication 5, caractérisé en ce que la dose de composition appliquée est telle que la dose du composé A est comprise entre 200 et 1000 g/ha, de préférence entre 300 et 600 g/ha, et que la dose du composé B est comprise entre 100 et 500 g/ha, de préférence entre 150 et 400 g/ha.

## Claims

1. Synergistic fungicidal composition, characterized in that it comprises a compound A chosen from iprodione, vinclozoline or procymidone, and a compound B which is cyprodinil, also known as 2-phenylamino-4-cyclopropyl-6-methylpyrimidine, and in that the compound A/compound B weight ratio is between 0.5 and 5.

2. Fungicidal composition according to claim 1, characterized in that the compound A/compound B weight ratio is between 1 and 3.

3. Fungicidal composition according to either of claims 1 and 2, characterized in that the compound A is 3-(3,5-dichlorophenyl)-N-isopropyl-2,4-dioxoimidazolidine-1-carboxamide, also known as iprodione.

4. Fungicidal composition according to one of claims 1 to 3, characterized in that it contains 0.5 to 95% of a mixture of compound A and compound B.

5. Treatment process intended to prevent fungal attacks on crops, characterized in that an effective and non-phytotoxic dose
- of a compound A chosen from iprodione, vinclozoline or procymidone, and of a compound B which is cyprodinil, also known as 2-phenylamino-4-cyclopropyl-6-methylpyrimidine; or
- of a composition according to one of claims 1 to 4 is applied to the aerial parts of the plants.

6. Treatment process according to claim 5, characterized in that the dose of composition applied is such that the dose of the compound A is between 200 and 1000 g/ha, preferably between 300 and 600 g/ha, and that the dose of the compound B is between 100 and 500 g/ha, preferably between 150 and 400 g/ha.

## Patentansprüche

1. Synergistische fungizide Zusammensetzung, dadurch gekennzeichnet, daß sie eine Verbindung A, ausgewählt aus Iprodion, Vinclozolin oder Procymidon, und eine Verbindung B, die Cyprodinil, auch bezeichnet als 2-Phenylamino-4-cyclopropyl-6-methylpyrimidin, ist, umfaßt und daß das Gewichtsverhältnis Verbindung A/Verbindung B zwischen 0,5 und 5 liegt.

2. Fungizide Zusammensetzung nach Anspruch 1, dadurch gekennzeichnet, daß das Gewichtsverhältnis Verbindung A/Verbindung B zwischen 1 und 3 liegt.

3. Fungizide Zusammensetzung nach einem der Ansprüche 1 oder 2, dadurch gekennzeichnet, daß die Verbindung A 3-(3,5-Dichlorphenyl)-N-isopropyl-2,4-dioxoimidazolidin-1-carboxamid, auch bezeichnet als Iprodion, ist.

4. Fungizide Zusammensetzung nach einem der Ansprüche 1 bis 3, dadurch gekennzeichnet, daß sie 0,5 bis 95% an Mischung der Verbindung A und der Verbindung B enthält.

5. Behandlungsverfahren, das dazu bestimmt ist, Angriffe von Pilzen auf Kulturen zu verhindern, dadurch gekennzeichnet, daß man auf die oberirdischen Teile der Pflanzen eine wirksame und nicht-phytotoxische Dosis:
- einer Verbindung A, ausgewählt aus Iprodion, Vinclozolin oder Procymidon, und einer Verbindung B, die Cyprodinil, auch bezeichnet als 2-Phenylamino-4-cyclopropyl-6-methylpyrimidin, ist, oder
- einer Zusammensetzung nach einem der Ansprüche 1 bis 4 aufbringt.

6. Behandlungsverfahren nach Anspruch 5, dadurch gekennzeichnet, daß die ausgebrachte Dosis der Zusammensetzung so ist, daß die Dosis der Verbindung A zwischen 200 und 1000 g/ha, vorzugsweise zwischen 300 und 600 g/ha beträgt und daß die Dosis der Verbindung B zwischen 100 und 500 g/ha, vorzugsweise zwischen 150 und 400 g/ha beträgt.
